# EUROPEAN PATENT APPLICATION

(11) **EP 4 841 682 A1**
(43) Date of publication of application: **18.11.2026**
(21) Application number: 26172826.5
(22) Date of filing: 16.04.2026
(51) Int. Cl.: H01M 4/04, H01M 4/139, H01M 10/04

(54) **MANUFACTURING METHOD OF ELECTRODE AND ELECTRODE**

(30) Priority: 15.05.2025 JP 2025082163
(71) Applicant: Toyota Jidosha Kabushiki Kaisha, Toyota-shi, Aichi-ken 471-8571 (JP)
(72) Inventor: SHIMURA, Yosuke, TOYOTA-SHI, AICHI-KEN, 471-8571 (JP); IKEYAMA, Suguru, TOYOTA-SHI, AICHI-KEN, 471-8571 (JP); KATO, Kazuhito, TOYOTA-SHI, AICHI-KEN, 471-8571 (JP); SAKASHITA, Yasuhiro, TOYOTA-SHI, AICHI-KEN, 471-8571 (JP); NAKANO, Takahiko, TOYOTA-SHI, AICHI-KEN, 471-8571 (JP); HIRUKAWA, Tomofumi, TOYOTA-SHI, AICHI-KEN, 471-8571 (JP)
(74) Representative: Cabinet Beau de Loménie

(57) **Abstract**

A manufacturing method of an electrode includes a layer forming step of applying a mixture including active material particles having a hollow structure to at least one surface of a current collector having a sheet shape to form an electrode active material layer, and a rolling step of rolling the electrode active material layer by applying, to the electrode active material layer, a predetermined pressure for deforming the active material particles having the hollow structure.

## Description

### BACKGROUND OF THE INVENTION

### 1. Field of the Invention

The technology disclosed in the present specification relates to a manufacturing method of an electrode and an electrode.

### 2. Description of Related Art

Japanese Unexamined Patent Application Publication No. 2006-128039 (JP 2006-128039 A) discloses that, in a manufacturing method of a bipolar battery electrode, an active material that is difficult to be crushed is applied to one surface of a current collector and pressed first, and then an active material that is easy to be crushed is applied to the remaining surface and pressed.

### SUMMARY OF THE INVENTION

Roll pressing using a roller is performed on an electrode including an electrode active material layer coated on a surface of a current collector having a sheet shape to increase a density of the electrode active material layer or to uniformize a thickness of the electrode active material layer. However, even when a pressing pressure is increased, a density of the active material in the electrode active material layer is difficult to be increased. In addition, JP 2006-128039 A does not disclose a solution to such a problem.

The present specification discloses a manufacturing method of an electrode. The manufacturing method includes a layer forming step of applying a mixture including active material particles having a hollow structure to at least one surface of a current collector having a sheet shape to form an electrode active material layer, and a rolling step of rolling the electrode active material layer by applying, to the electrode active material layer, a predetermined pressure for deforming the active material particles having the hollow structure.

With the configuration above, through the rolling step, a part of the active material particles having the hollow structure is deformed, and is crushed or broken. Therefore, the density of the active material in the electrode active material layer can be increased as compared with a density of the related art.

The present specification discloses an electrode having a configuration in which the electrode includes a current collector having a sheet shape, and an electrode active material layer provided on at least one surface of the current collector, in which the electrode active material layer includes active material particles having a hollow structure and active material particles in a state in which a hollow portion of the hollow structure is crushed.

With the configuration above, the electrode active material layer of the electrode includes active material particles in a state in which a hollow portion of the hollow structure is crushed. Therefore, an electrode in which the density of the active material in the electrode active material layer is high is obtained.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a flowchart showing a manufacturing method of an electrode;
FIG. 2 is a cross-sectional view for describing step S100;
FIG. 3 is a partial cross-sectional view for describing step S120;
FIG. 4 is an enlarged view of a part of an electrode active material layer before step S120, in which positive electrode active material particles having a hollow structure are included;
FIG. 5 is an enlarged view of a part of the electrode active material layer after step S120, in which positive electrode active material particles having the hollow structure are included;
FIG. 6 is a cross-sectional view of a secondary battery; and
FIG. 7 is an exploded perspective view of an electrode stack.

### DETAILED DESCRIPTION OF EMBODIMENTS

Main features of embodiments described below are listed below. These features can be optionally combined.

With a manufacturing method of an electrode disclosed in the present specification, an electrode active material layer may be a positive electrode active material layer including active material particles as a positive electrode active material. With the configuration above, a density of an active material in the positive electrode, in which the density of the active material needs to be higher than that of the negative electrode, can be increased.

With the manufacturing method of an electrode disclosed in the present specification, a second rolling step of rolling the electrode active material layer after a first rolling step that is the rolling step is further provided, in which a pressure applied to the electrode active material layer in the second rolling step may be less than a pressure applied to the electrode active material layer in the first rolling step.
According to the configuration, through the second rolling step, the density of the active material in the electrode active material layer can be further increased, and the undulation that has occurred in the electrode by the first rolling step can be reduced.

With the manufacturing method of an electrode disclosed in the present specification, a mixture may include active material particles having a non-hollow structure, and a diameter of the active material particles having the non-hollow structure may be less than or equal to twice a wall thickness of the active material particles having the hollow structure.
With the configuration above, the electrode active material layer includes the active material particles having the hollow structure and the active material particles having the non-hollow structure. Since the diameter of the active material particles having the non-hollow structure is less than or twice the wall thickness of the active material particles having the hollow structure, even when the active material particles having the hollow structure are deformed in the rolling step, the likelihood that an excessive pressure is applied to the active material particles having the non-hollow structure is reduced.

Embodiments will be described with reference to the drawings. Each drawing is merely an example, and the present embodiment is not limited to the contents shown in the drawings. In addition, since each drawing is an example, some parts may be omitted.

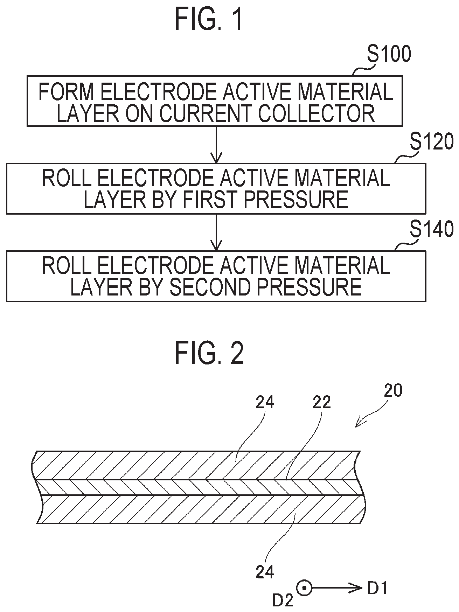

FIG. 1 shows a manufacturing method of an electrode by a flowchart. The manufacturing method includes, in outline, a step (step S100) of forming an electrode active material layer on a current collector, a step (step S120) of applying a first pressure to the electrode active material layer and rolling the electrode active material layer, and a step (step S140) of applying a second pressure to the electrode active material layer and rolling the electrode active material layer. Step S100 corresponds to a layer forming step. Step S120 corresponds to a first rolling step. Step S140 corresponds to a second rolling step. However, step S140 is not mandatory. When step S140 is omitted, step S120 is referred to as the rolling step. The manufacturing method may further include a step not shown in FIG. 1.

FIG. 2 is a view for describing step S100, and schematically shows a cross section of an electrode 20. In step S100, an electrode active material layer 24 is formed by applying a mixture including active material particles having a hollow structure to at least one surface of a current collector 22 having a sheet shape.

FIG. 2 shows a cross section of the current collector 22 and the like from a viewpoint orthogonal to a longitudinal direction D1 of the current collector 22. A direction D2 orthogonal to the longitudinal direction D1 refers to a width direction D2 of the current collector 22. The current collector 22 is a metal foil. The electrode 20 is, for example, a positive electrode used in a chargeable and dischargeable lithium-ion battery. The current collector 22 is, for example, an aluminum foil. A slurry that is a mixture obtained by mixing an active material, a conductive auxiliary agent, a binder, a solvent, and the like, is applied to both surfaces of the current collector 22, so that the electrode active material layer 24 is provided on both surfaces of the current collector 22 as shown in FIG. 2. When the electrode 20 is a positive electrode, the electrode active material layer 24 corresponds to a positive electrode active material layer including active material particles as a positive electrode active material.

As the positive electrode active material, any type of active material, such as an olivine type, a layered rock salt type, and a spinel type can be employed, and examples thereof include lithium iron phosphate, lithium nickelate, lithium cobaltate, and lithium manganate. The positive electrode active material may be, for example, a ternary material including three elements of nickel, cobalt, and manganese.

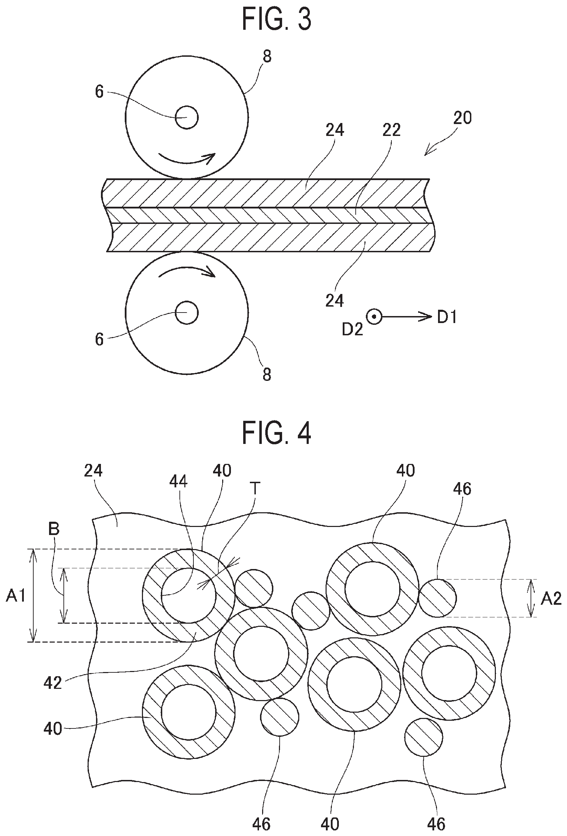

FIG. 3 is a view for describing step S120, and schematically shows a cross section of the electrode 20 as in FIG. 2. Although not shown in FIG. 1, a drying step of drying the electrode active material layer 24 provided on the current collector 22 is executed between step S100 and step S120. The drying step may also be executed after step S120 or after step S140. In step S120, the electrode active material layer 24 is rolled by applying, to the electrode active material layer 24, a predetermined pressure (first pressure) for deforming the active material particles having the hollow structure. When the electrode active material layer 24 is rolled, the electrode active material layer 24 and the current collector 22 may be rolled as a result.

According to FIG. 3, there is a pair of rollers 8, and the rollers 8 are in contact with respective surfaces of the electrode 20, that is, each of the rollers 8 is in contact with a corresponding one of the electrode active material layers 24 applied to both surfaces of the current collector 22. Roll pressing using the rollers 8 is executed in order to increase the density of the electrode active material layer 24 and to uniformize a thickness thereof. The rollers 8 have an elongated cylindrical shape along the width direction D2. According to FIG. 3, the electrode 20 is transported along the longitudinal direction D1 in a state in which the first pressure is applied from the rollers 8 rotatably supported about a roller shaft 6 serving as a center of rotation.

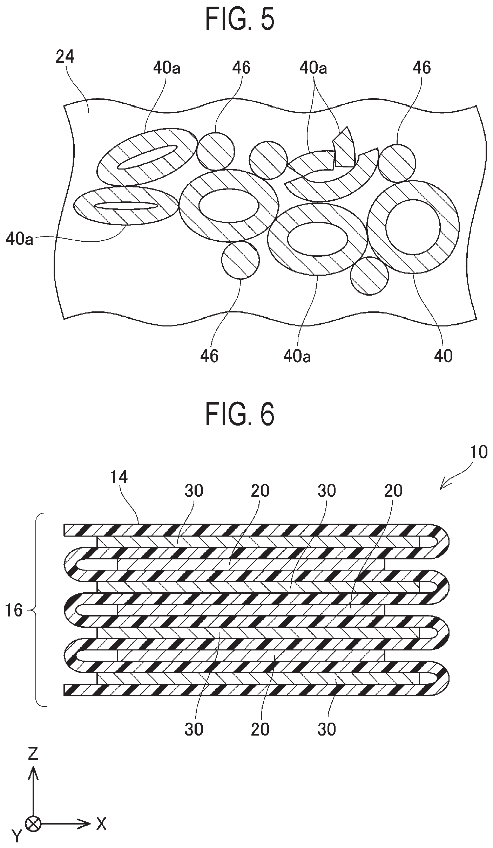

For a description of the active material particles having the hollow structure that are included in the electrode active material layer 24, reference can be made, for example, to the positive electrode active material particles disclosed in Japanese Unexamined Patent Application Publication No. 2020-35671 (JP 2020-35671 A). FIG. 4 is an enlarged view of a part of the electrode active material layer 24 including positive electrode active material particles 40 having a hollow structure, or the like. In FIG. 4 and FIG. 5 described later, the positive electrode active material particles 40 and the like are schematically shown in cross section. FIG. 4 shows the electrode active material layer 24 provided on the current collector 22 by step S100, and shows the electrode active material layer 24 before being subjected to the roll pressing by step S120.

In FIGS. 4 and 5, a particle shape of the positive electrode active material particles 40 and the like is simply represented by a circle or the like, but the particle shape may be a shape including distortion or unevenness as disclosed in JP 2020-35671 A. The positive electrode active material particles 40 have a shell portion 42 in which a plurality of primary particles is integrally bonded to each other, and a hollow portion 44 provided inside the shell portion 42. As disclosed in JP 2020-35671 A, a through-hole extending through to the hollow portion 44 may be provided in a part of the shell portion 42.

A thickness of the shell portion 42 of the positive electrode active material particles 40 corresponds to a wall thickness T of the active material particles having the hollow structure. The wall thickness T can be obtained by (outer diameter A1 of the positive electrode active material particles 40 - inner diameter B of the positive electrode active material particles 40)/2. The inner diameter B is a diameter of the hollow portion 44. When a plurality of the positive electrode active material particles 40 is observed, of course, there is a variation in each of the outer diameter A1 and the inner diameter B, and thus the wall thickness T may be a value such as an average value obtained statistically.

FIG. 5 is an enlarged view of a part of the electrode active material layer 24 including the positive electrode active material particles 40 having the hollow structure or the like as in FIG. 4. The electrode active material layer 24 shown in FIG. 5 is the electrode active material layer 24 after being subjected to the roll pressing by step S120. Therefore, the positive electrode active material particles 40 are deformed. In FIG. 5, the positive electrode active material particles 40 deformed by step S120 are indicated by reference sign 40a. The positive electrode active material particles 40a are, for example, deformed into a flat shape in which the hollow portion 44 is crushed, or further deformed and cracked or broken. A degree of crushing of the hollow portion 44 also varies depending on the positive electrode active material particles 40a. The positive electrode active material particles 40a include particles having a shape in which the hollow portion 44 is crushed to such an extent that the hollow portion 44 completely disappears, and particles having a shape in which the hollow portion 44 is crushed to such an extent that the hollow portion 44 maintains an elliptical shape, an oval shape, or the like.

As shown in FIG. 5, the electrode active material layer 24 also includes the positive electrode active material particles 40 that are not deformed. That is, the electrode active material layer 24 after step S120 is in a state of including the positive electrode active material particles 40 having the hollow structure and the positive electrode active material particles 40 (40a) in a state in which the hollow portion 44 is crushed. Therefore, the first pressure applied to the electrode active material layer 24 in step S120 is set to a value capable of deforming at least a part of the positive electrode active material particles 40. The first pressure is, for example, a value set in advance by an experiment or a simulation. In addition, the first pressure may be set to a pressure corresponding to an appropriate porosity of the electrode active material layer 24, for example, with reference to JP 2006-128039 A.

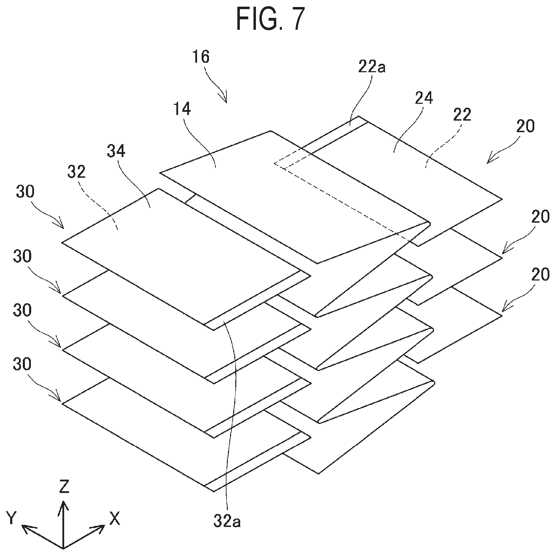

As described above, according to the present embodiment, the electrode active material layer 24 provided on the current collector 22 by step S100 includes the positive electrode active material particles 40 having the hollow structure. In step S120, a part of the positive electrode active material particles 40 having the hollow structure is deformed and is crushed or broken. Therefore, the density of the active material in the electrode active material layer 24 can be increased as compared with a density of the related art. In particular, by applying steps S100 and S120 of the present embodiment to a manufacturing process of the electrode 20 that is a positive electrode, a positive electrode in which an active material density is increased can be obtained. The present embodiment can also be applied to a manufacturing process of a negative electrode (see a negative electrode 30 in FIGS. 6 and 7) including a negative electrode current collector and a negative electrode active material layer provided on the negative electrode current collector.

The positive electrode active material particles 40 before deformation have a larger particle shape as compared with a particle shape of the positive electrode active material particles 40a after deformation. That is, in the electrode active material layer 24 at a stage of being applied to the current collector 22, a specific surface area of the positive electrode active material particles 40 is relatively small. Therefore, an amount of a binder as a binding material included in the electrode active material layer 24 can be reduced. By reducing an amount of the binder, a resistance in the electrode active material layer 24 can be reduced.

In order to further increase the density of the active material in the electrode active material layer 24, it is preferable that the number of the deformed positive electrode active material particles 40a is larger than the number of the positive electrode active material particles 40 that is not deformed. Therefore, the first pressure may be set to a value capable of deforming positive electrode active material particles 40 in a number exceeding at least half of the positive electrode active material particles 40 included in the electrode active material layer 24.

The mixture applied to the current collector 22 in order to form the electrode active material layer 24 may include active material particles having a non-hollow structure, that is, solid active material particles. In FIGS. 4 and 5, the positive electrode active material particles having the non-hollow structure that are included in the electrode active material layer 24, are indicated by reference sign 46. As described above, the electrode active material layer 24 may include the positive electrode active material particles 40 having the hollow structure and the positive electrode active material particles 46 having a non-hollow structure in a mixed state. The positive electrode active material particles 40 and the positive electrode active material particles 46 may be the same type (composition) of active material or different types of active material. For example, a diameter (outer diameter) A2 of the positive electrode active material particles 46 is less than or equal to twice the wall thickness T of the positive electrode active material particles 40. In a case where the outer diameter A2 is less than or equal to twice the wall thickness T, when the electrode active material layer 24 is rolled by step S120 and the positive electrode active material particles 40 are deformed, an excessive pressure is likely to be restrained from being applied to the positive electrode active material particles 46, and cracking of the positive electrode active material particles 46 can be suppressed.

According to FIG. 1, step S140 is executed on the electrode 20 in which the electrode active material layer 24 is rolled by step S120. In step S140, as shown in FIG. 3, the electrode 20 transported in the longitudinal direction D1 is subjected to roll pressing, and the electrode active material layer 24 is further rolled. In the present embodiment, the second pressure applied to the electrode active material layer 24 in step S140 is set to a value smaller than the first pressure applied to the electrode active material layer 24 in step S120.

In step S120, when the electrode active material layer 24 is pressed by a high pressure (first pressure) capable of deforming the positive electrode active material particles 40 having the hollow structure, the electrode 20 may have a wavy undulation. In step S 140, by pressing the electrode active material layer 24 with the second pressure lower than the first pressure, the density of the active material in the electrode active material layer 24 can be further increased, and the undulation described above can be corrected to reduce the undulation as a result.

The electrode 20 manufactured by the manufacturing method of the present embodiment is used as a part of a configuration of a secondary battery 10, for example, as shown in FIGS. 6 and 7. FIG. 6 schematically shows a cross section of the secondary battery 10. The secondary battery 10 is a lithium-ion battery. The secondary battery 10 includes an electrode stack 16 provided by alternately stacking the electrode 20 (hereinafter, the positive electrode 20) and the negative electrode 30 in a first direction with a separator 14 sandwiched therebetween. FIG. 7 schematically shows the electrode stack 16 in an exploded perspective view. The secondary battery 10 includes a flexible housing (not shown), and the electrode stack 16 is sealed inside the housing. An electrolyte solution (not shown) is sealed inside the housing. The housing is, for example, a laminate sheet. In FIGS. 6 and 7, X, Y, and Z axes orthogonal to each other are shown for convenience of description. The Z-axis direction corresponds to the first direction. The first direction may be referred to as a stacking direction. FIG. 6 is a cross-sectional view taken along a cross section orthogonal to the Y axis.

As shown in FIGS. 6 and 7, the electrode stack 16 is provided by alternately stacking the substantially rectangular positive electrode 20 and the substantially rectangular negative electrode 30 with the zigzag-folded strip-shaped separator 14 interposed therebetween, the separator 14 having mountain folding and valley folding that are alternately repeated. In this case, a state is achieved in which each of a plurality of positive electrodes 20 is sandwiched between folded surfaces of the separator 14 on one side, and each of a plurality of negative electrodes 30 is sandwiched between folded surfaces of the separator 14 on the other side. Each of the positive electrode 20 and the negative electrode 30 extends in the X-axis direction and the Y-axis direction.

The separator 14 is made of a material having both permeability that allows movement of a charge carrier (here, a lithium ion) accompanying charging and discharging and insulating properties that suppress short-circuiting due to contact between the positive electrode 20 and the negative electrode 30. Examples of the material of the separator 14 include polypropylene and polyethylene. As shown in FIGS. 6 and 7, the configuration in which the zigzag-folded continuous separator 14 is sandwiched between the electrodes is merely an example. The separator 14 sandwiched between the electrodes may be separated from each other.

As shown in FIG. 7, the positive electrode 20 includes the current collector 22 (hereinafter, the positive electrode current collector 22) and the electrode active material layer 24 (hereinafter, the positive electrode active material layer 24) provided on the positive electrode current collector 22. The negative electrode 30 includes a negative electrode current collector 32 and a negative electrode active material layer 34 provided on the negative electrode current collector 32. The negative electrode active material layer 34 is, for example, provided on both surfaces of the negative electrode current collector 32. The negative electrode current collector 32 is, for example, a copper foil. The negative electrode active material layer 34 contains a negative electrode active material. Examples of the negative electrode active material include a carbon material, such as graphite, hard carbon, and soft carbon, a material that forms an alloy with lithium, such as silicon (Si), and a lithium alloy.

Each of the positive electrode 20 and the negative electrode 30 includes an uncoated portion 22a, 32a that protrudes in a direction intersecting the first direction. The uncoated portion 22a of the positive electrode 20 is a region of the positive electrode current collector 22 on which the positive electrode active material layer 24 is not coated. The uncoated portion 32a of the negative electrode 30 is a region of the negative electrode current collector 32 on which the negative electrode active material layer 34 is not coated. For example, the Y-axis direction (+Y-direction and -Y-direction) corresponds to a direction intersecting the first direction. According to FIG. 7, the uncoated portion 22a of the positive electrode 20 protrudes in the +Y-direction, and the uncoated portion 32a of the negative electrode 30 protrudes in the -Y-direction. Although not shown, the uncoated portion 22a included in each of the positive electrodes 20 is electrically connected to a positive terminal, for example, via a current collecting tab, at a location outside a region sandwiched between folded surfaces of the separator 14. Similarly, although not shown, the uncoated portion 32a included in each of the negative electrodes 30 is electrically connected to a negative terminal, for example, via a current collecting tab, at a location outside a region sandwiched between folded surfaces of the separator 14.

Although specific examples of the technology disclosed in the present specification have been described in detail above, these examples are merely examples and do not limit the scope of the claims. The technology described in the claims includes various modifications and changes of the specific examples exemplified above. In addition, the technical elements described in the present specification or in the drawings exhibit technical usefulness alone or in various combinations, and are not limited to the combinations described in the claims at the time of filing of application. In addition, the technology exemplified in the present specification or the drawings achieves a plurality of purposes at the same time, and achieving one of the purposes itself has technical usefulness.

## Claims

1. A manufacturing method of an electrode (20), the manufacturing method comprising:
a layer forming step (S100) of applying a mixture including active material particles (40) having a hollow structure to at least one surface of a current collector (22) having a sheet shape to form an electrode active material layer (24); and
a rolling step (S120) of rolling the electrode active material layer (24) by applying, to the electrode active material layer (24), a predetermined pressure for deforming the active material particles (40) having the hollow structure.

2. The manufacturing method according to claim 1, wherein the electrode active material layer (24) is a positive electrode active material layer including the active material particles (40) as a positive electrode active material.

3. The manufacturing method according to any one of claims 1 and 2, further comprising a second rolling step (S140) of rolling the electrode active material layer (S140) after a first rolling step that is the rolling step (S120), wherein a pressure applied to the electrode active material layer (24) in the second rolling step (S140) is less than a pressure applied to the electrode active material layer (24) in the first rolling step (S120).

4. The manufacturing method according to any one of claims 1 to 3, wherein the mixture includes active material particles (46) having a non-hollow structure, and a diameter of the active material particles (46) having the non-hollow structure is less than or equal to twice a wall thickness of the active material particles (40) having the hollow structure.

5. An electrode (20) comprising:
a current collector (22) having a sheet shape; and
an electrode active material layer (24) provided on at least one surface of the current collector (22),
wherein the electrode active material layer (24) includes active material particles (40) having a hollow structure and active material particles (40) in a state in which a hollow portion of the hollow structure is crushed.
